# FASCICULE DE BREVET EUROPEEN

(11) **EP 1 299 608 B1**
(45) Date de publication et mention de la délivrance du brevet: **31.05.2006**
(21) Numéro de dépôt: 01949601.7
(22) Date de dépôt: 29.06.2001
(51) Int. Cl.: E05B 49/00, B60R 25/04

(54) **PROCEDE SECURISE DE GESTION DU FONCTIONNEMENT D'UN APPAREIL PAR UN UTILISATEUR ET LE MATERIEL POUR LA MISE EN OEUVRE DU PROCEDE**
GESICHERTES VERFAHREN ZUM BETREIBEN EINES GERÄTES VON EINEM ANWENDER UND VORRICHTUNG ZUR DURCHFÜHRUNG DES VERFAHRENS
SECURE METHOD FOR MANAGING THE OPERATING CONDITIONS OF A APPARATUS BY A USER AND EQUIPMENT THEREFOR

(30) Priorité: 30.06.2000 FR 0008643
(43) Date de publication de la demande: 09.04.2003
(73) Titulaire: SEVIC SYSTEM AG, 56564 Neuwied (DE)
(72) Inventeur: ALBERT, Pascal, L-8077 Bertrange (LU)
(74) Mandataire: Dennemeyer, John James
(86) Numéro de dépôt international: PCT/FR2001/002104
(87) Numéro de publication internationale: WO 2002/001027

(56) Documents cités:
- WO-A-00/13947
- US-A- 5 736 935
- US-A- 5 869 908
- US-A- 6 024 382

## Description

La présente invention concerne un procédé de sécurité antivol pour véhicule à moteur par gestion du fonctionnement d'un appareil par un utilisateur, lequel procédé est du type consistant à rendre possible le fonctionnement de l'appareil uniquement après détection par des moyens récepteurs situés à proximité dudit appareil, d'un signal émis par des moyens émetteurs portables; l'invention concerne également le matérial pour la mise en oeuvre du procédé.

On connaît déjà des systèmes de sécurité adaptés sur un appareil qui, pour autoriser le fonctionnement de cet appareil nécessitent l'existence d'une liaison entre un émetteur porté par l'utilisateur et un récepteur disposé à proximité dudit appareil ou sur ledit appareil.

Par exemple, le document EP-0 319 428 décrit un dispositif de sécurité antivol pour véhicule comportant un émetteur portable qui émet un signal haute fréquence. (HF), et un récepteur fixe adapté pour couper automatiquement le circuit d'allumage du moteur du véhicule équipé, lorsque la distance entre ledit émetteur portable et ledit récepteur embarqué dépasse une certaine valeur. Un tel système permet de stopper la motorisation du véhicule, en particulier en cas de vol, dès que ce véhicule s'éloigne du porteur de l'émetteur.
L'émetteur émet un signal HF cyclique codé, de faible puissance. Lorsque ce signal est reconnu et validé par les moyens de réception, un relais ou équivalent ferme le circuit d'allumage du moteur pour assurer son fonctionnement. Lorsque le système de réception ne reçoit plus le signal HF émis, le relais ou équivalent coupe le circuit d'allumage pour stopper la motorisation.
Un circuit de temporisation est prévu pour maintenir la commande du relais pendant une durée supérieure à la durée qui sépare deux séquences codées, de manière à éviter une interruption abusive en cas de parasites, ou plus généralement en cas de perte accidentelle du signal.

Cependant, si la durée de perte accidentelle de ce signal est supérieure à la durée de temporisation, le circuit d'allumage est automatiquement coupé par l'intermédiaire du relais et la motorisation du véhicule ne fonctionne plus.

Cela peut entraîner des dysfonctionnements importants, et peut même être source de danger.

Des exemples de procédés de sécurité antivol pour véhicule à moteur sont décrits dans les documents WO-A-00 139 47 et US-A-5 869 908.

Ce document WO-A-00 139 47 décrit un procédé de sécurité antivol pour véhicule à moteur par gestion du fonctionnement d'un appareil du véhicule selon le préambule de la revendication 1. Ce document WO-A-00 139 47 décrit aussi un matériel pour la mise en oeuvre de ce procédé selon le préambule de la revendication 4.

La présente invention a pour but de remédier aux inconvénients mentionnés ci-dessus et d'éviter une interruption abusive en cas de parasites, ou plus généralement en cas de perte accidentelle du signal.

Ces buts ainsi que d'autres sont atteints, suivant l'invention, par un nouveau procédé de sécurité antivol pour véhicule à moteur ayant les caractéristiques de la partie caractérisante de la revendication 1, et par un nouveau matériel pour la mise en oeuvre de ce procédé suivant la partie caractérisante de la revendication 4.

Dans le cadre d'un procédé consistant à rendre possible le fonctionnement d'un appareil uniquement après détection par des moyens récepteurs situés à proximité dudit appareil, d'un signal émis par des moyens émetteurs portables, la présente invention prévoit de ne plus tenir compte de la détection par les moyens récepteurs du signal émis par les moyens émetteurs, après activation de moyens de détection de présence aménagés à proximité dudit appareil, ou intégrés audit appareil.
Le procédé conforme à la présente invention consiste en fait à actionner un système de commutation interposé sur le circuit de commande de l'appareil, de manière à fermer ce circuit après détection du signal émis par les moyens émetteurs, et à verrouiller cette fermeture par l'activation des moyens de détection de présence aménagés à proximité dudit appareil, ou intégrés audit appareil.

Selon une forme de réalisation préférée le procédé conforme à la présente invention consiste, une fois l'appareil en fonctionnement, à déclencher par chaque activation des moyens de détection de présence une deuxième détection de sécurité du signal émis par les moyens émetteurs, pendant un délai déterminé et, une fois ledit délai dépassé, à verrouiller, soit la fermeture du circuit de commande dudit appareil dans le cas d'une validation de signal, soit l'ouverture dudit circuit en cas de non validation de ce signal, en ne tenant plus compte après ce verrouillage de fermeture ou d'ouverture du circuit, de la liaison émetteur/récepteur.
On tient compte ensuite à nouveau de la liaison de base émetteur/récepteur, après un changement d'état (désactivation) des moyens de détection de présence.

En cas d'absence de problème lié à un vol ou à une agression, les moyens de détection de présence neutralisent le dispositif émetteur/récepteur et l'appareil peut fonctionner normalement, sans être perturbé par d'éventuels parasites ou perte accidentelle de signal.

Le matériel pour la mise en couvre de ce procédé comprend :
- des moyens émetteurs portables,
- un module récepteur situé à proximité de l'appareil dont on désire gérer le fonctionnement,
- un système de commutation (type relais, transistor, interrupteur ou équivalent) interposé sur le circuit de commande de l'appareil,
- des moyens de détection de présence aménagés à proximité dudit appareil ou intégrés audit appareil, et
- des moyens de commande (par exemple en forme de microprocesseur) qui sont agencés pour fermer le circuit de commande de l'appareil par l'intermédiaire du système de commutation lorsque le signal émis par les moyens émetteurs est détecté par les moyens récepteurs, et reconnu, et qui sont agencés pour verrouiller la fermeture de ce circuit de commande lorsque les moyens de détection de présence sont activés.

Les moyens émetteurs ont de préférence une puissance limitée, de manière à autoriser la réception du signal par le module récepteur, uniquement dans un rayon de quelques mètres.

Toujours selon l'invention, le système de commutation est en forme de sortie de puissance interposée sur le circuit de commande de l'appareil pour couper ou rétablir ce circuit en fonction du signal ou de l'absence de signal fourni par des moyens de commande en forme de microprocesseur, lequel microprocesseur gère l'envoi de ce signal en fonction des informations reçues des moyens récepteurs.

Selon une autre caractéristique préférentielle, les moyens de commande du matériel de sécurité sont agencés de manière, une fois l'appareil en fonctionnement, à déclencher par chaque activation des moyens de détection de présence une deuxième détection de sécurité du signal émis par les moyens émetteurs portables, pendant un délai déterminé (par exemple 15 secondes) ; une fois ce délai dépassé, ces moyens de commande verrouillent, soit la fermeture du circuit de commande de l'appareil dans le cas d'une validation dudit signal, soit l'ouverture dudit circuit en cas de non validation dudit signal, ceci en ne tenant plus compte après ce verrouillage de fermeture ou d'ouverture, de la liaison émetteur/récepteur.
Les moyens de commande du matériel de sécurité tiennent compte à nouveau de la liaison émetteur/récepteur, après un changement d'état (désactivation) des moyens de détection de présence.

Dans une forme de réalisation appliquée à un dispositif de sécurité antivol pour véhicule à moteur, le matériel conforme à la présente invention comprend des moyens émetteurs portables, un module récepteur embarqué sur le véhicule, des moyens de détection de présence intégrés audit véhicule et des moyens de commande d'un système de commutation placé sur au moins un circuit nécessaire au bon fonctionnement dudit véhicule, par exemple le circuit d'allumage de la motorisation, le circuit démarreur, ou le circuit d'arrivée de carburant. Ces moyens de commande sont agencés pour fermer ledit circuit par l'intermédiaire dudit système de commutation lorsque le signal émis par les moyens émetteurs est détecté par le module récepteur, et reconnu ;ils sont aussi agencés pour gérer le verrouillage de la fermeture ou de l'ouverture dudit circuit en fonction du second contrôle d'identification déclenché par les moyens de détection de présence.

Dans cette application particulière, les moyens de détection de présence peuvent être en forme de capteur implanté dans ou sur le siège du véhicule et adapté pour être activé lorsque l'utilisateur du véhicule s'asseoit sur ledit siège. Dans des variantes de réalisation, ces moyens de détection de présence peuvent être en forme de système de détection de l'enclenchement d'une vitesse, ou en forme de système de détection d'un seuil de régime moteur.
Dans le cadre d'une application à un véhicule automobile ou à un poids lourd, ces moyens de détection de présence peuvent se présenter sous la forme d'un capteur de fermeture/ouverture de la portière du conducteur, en forme d'un système de détection de l'enclenchement de la ceinture de sécurité, en forme d'un capteur infrarouge positionné dans l'habitacle, ou autre...

Selon une autre caractéristique, des moyens adaptés permettent de détecter la présence ou l'absence d'un contact démarreur, l'information correspondante étant transmise aux moyens de commande dé manière à activer le module récepteur uniquement en cas de présence dudit contacteur démarreur.

Selon encore une autre particularité, dans le cadre d'une application à un véhicule automobile ou à un poids lourd, un capteur de présence peut être aménagé à proximité de la portière du conducteur, l'information d'activation dudit capteur de présence étant transmise aux moyens de commande du dispositif de sécurité, de manière à activer le module récepteur.

Mais l'invention sera encore illustrée, sans être aucunement limitée, par la description suivante d'un mode de réalisation particulier, donné uniquement à titre d'exemple et représenté sur les dessins annexés dans lesquels :
- la figure 1 est un schéma de principe des moyens émetteurs portables d'un dispositif de sécurité antivol pour véhicule à moteur, conforme à la présente invention ;
- la figure 2 représente le schéma de principe des moyens de réception et de commande embarqués sur le véhicule.

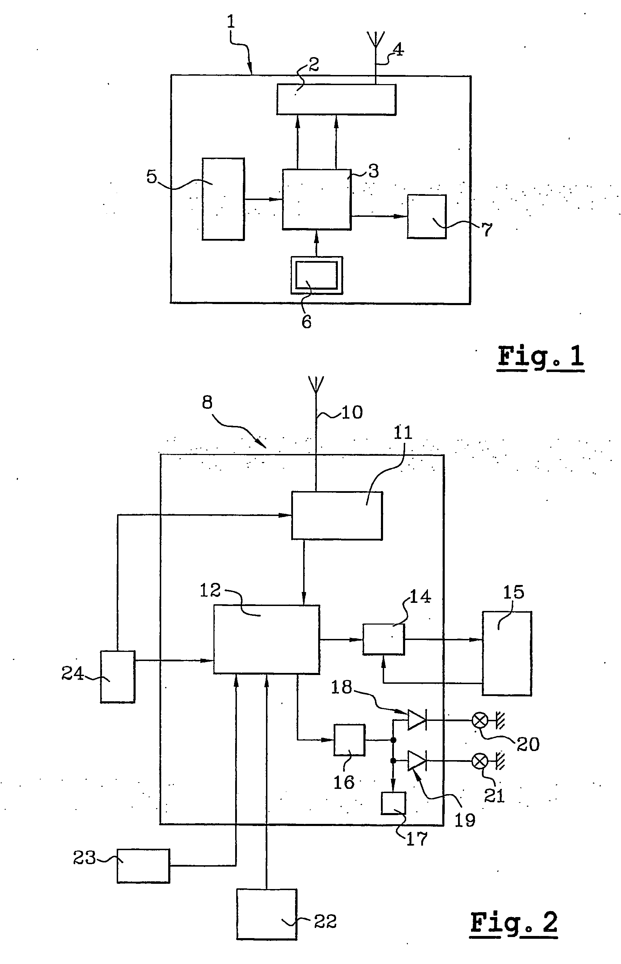

Les moyens émetteurs 1 représentés sur la figure 1 comprennent un module d'émission 2, par exemple haute fréquence (HF), dont le fonctionnement est géré par un microprocesseur 3 pour adresser à une antenne 4 un signal codé de type cyclique et de faible puissance.
Le module d'émission 2 peut être un modèle LQ-TX 433A-S de la Société LPRS OXON - Grande-Bretagne. Le microprocesseur 3 à horloge intégrée peut être un modèle 2343 avec EDPROM, de la Société ATMEL (Paris, France).

Les différents composants des moyens émetteurs 1 sont implantés sur un circuit imprimé et reliés entre eux de manière logique. Une batterie 5 assure leur alimentation électrique et l'ensemble est placé dans un boîtier portable qui peut être muni d'un système d'accrochage sur une poche ou une ceinture.
La mise en/hors service des moyens émetteurs 1 est commandée par un interrupteur marche/arrêt 6 aménagé sur le boîtier portable. Ce boîtier comporte encore un témoin lumineux 7 du genre LED dont l'activation est gérée par le microprocesseur 3.

Le signal émis par les moyens émetteurs 1 porte un codage généré par le microprocesseur 3 pour sécuriser le fonctionnement du dispositif. D'autre part, le signal est émis de manière cyclique pour économiser la batterie 5 ; par exemple l'émission est réalisée sur la fréquence des 868,35 Mhertz, et ceci pendant une seconde toutes les 2,5 ou 3 secondes (la durée d'émission et la période sont gérées par le microprocesseur 3).
On prévoit aussi de limiter la puissance du signal émis (quelques milliwatts) de manière à permettre la réception de ce signal uniquement dans un rayon de quelques mètres.

Les moyens de réception et de commande 8 représentés sur la figure 2 sont embarqués sur le véhicule équipé (par exemple une motocyclette). Ils sont constitués d'une antenne 10 connectée à un module de réception 11 associé à un microprocesseur 12. Ce microprocesseur 12 est chargé de vérifier par identification de codage que le signal reçu est bien celui provenant des moyens émetteurs 1 et, en fonction des informations reçues, chargé de gérer l'activation:
- d'une sortie de puissance 14 (relais ou équivalent) placée sur le circuit d'allumage 15 de la motorisation du véhicule, et
- d'une sortie de puissance 16 (relais ou équivalent) qui commande, simultanément, une alarme sonore 17 en forme de « buzzer » et une sortie dédoublée avec diodes anti-retour 18, 19 pour alimenter les faisceaux clignotants droits 20 et gauches 21.

Pour gérer le fonctionnement du dispositif de sécurité, le microprocesseur 12 tient également compte:
- de l'activation ou de la désactivation d'un capteur de présence 22 aménagé sur le siège conducteur du véhicule. Ce capteur 22 peut être du type FSR distribué par la Société ALCYON - Paris, France, et
- de la présence ou de l'absence d'un contact démarreur du véhicule. L'information correspondante est transmise au microprocesseur par des moyens de détection appropriés 23 (par exemple à partir d'une détection de tension sur le contacteur marche/arrêt du démarreur).

Le module de réception 11 peut être un modèle RX 5000 fabriqué par la Société RFM (USA) et distribué par la Société EQUIPEMENT SCIENTIFIQUE - Garche, France. Le microprocesseur 12 est par exemple un modèle PIC 16C avec convertisseur intégré de la Société MICROTCHIP (USA) et distribué par la Société AROW - Rennes, France.
Les différents composants électroniques des moyens de réception et dé commande 8 sont implantés sur un circuit imprimé et reliés entre eux de manière logique. Le module de réception 11 et le microprocesseur 12 sont alimentés par la batterie 24 du véhicule.

Une fois les moyens de réception et de commande 8 correctement implantés sur le véhicule équipé, le dispositif de sécurité antivol fonctionne de la manière décrite ci-après.

Les moyens émetteurs 1 et le module récepteur 11 étant désactivés, le microprocesseur 12 commande la sortie de puissance 14 de manière à ce que le circuit d'allumage 15 du véhicule soit ouvert, interdisant le fonctionnement de la motorisation.

La mise en service des moyens émetteurs 1 est réalisée en plaçant l'interrupteur 6 en position « marche » ; le témoin lumineux 7 peut signaler cette activation par exemple par un éclairage continu dit « long» supérieur à 1 seconde. D'autre part, la mise en service du module récepteur 11 est réalisée par le contact démarreur du véhicule, au moyen de la clé placée en position 12 volts après contact. Le module récepteur 11 est en fait activé par le microprocesseur 12 à partir d'une information fournie par les moyens de détection 23.

Dès le contact démarreur établi, le module récepteur 11 détecte le signal HF émis par les moyens émetteurs 1 et il envoie l'information au microprocesseur 12. Après identification du signal, le microprocesseur 12 ferme le circuit d'allumage 15 par l'intermédiaire de la sortie de puissance 14 ; simultanément il peut provoquer l'émission d'un message d'identification en actionnant les feux clignotants 20, 21 et le buzzer 17 par l'intermédiaire de la sortie de puissance 16 (par exemple émission de trois signaux clignotants « brefs » accompagnés de trois bips sonores).
On peut alors démarrer le véhicule.

Lorsque l'utilisateur s'asseoit sur le siège du véhicule, le capteur de présence 22 est activé et le microprocesseur 12 demande alors une validation supplémentaire de sécurité du signal émis par les moyens émetteurs 1, pendant un délai de sécurité déterminé, qui peut être de l'ordre de 15 secondés.

Dans le cas général où les moyens récepteurs 11 détectent et reconnaissent le signal émis par les moyens émetteurs 1 pendant toute la durée du délai de sécurité précité, à l'expiration de ce délai, le microprocesseur 12 verrouille la fermeture du circuit d'allumage 15 par l'intermédiaire de la sortie de puissance 14 en ne tenant plus compte du signal HF de base des moyens émetteurs/récepteurs.
Le véhicule peut être utilisé de manière conventionnelle, sans que cette utilisation puisse être perturbée par d'éventuelles pertes accidentelles du signal HF.

Dans l'autre cas où les moyens récepteurs 11 ne détectent pas ou ne reconnaissent pas le signal HF émis par les moyens émetteurs portables 1 pendant toute la durée du délai de sécurité, le microprocesseur 12 ouvre le circuit d'allumage 15 par l'intermédiaire de la sortie de puissance 14 et verrouille l'ouverture de ce circuit en ne tenant plus compte du signal HF des moyens émetteurs/récepteurs.

Dans l'un et l'autre cas précités, le microprocesseur 12 tiendra compte à nouveau de la liaison HF des moyens émetteurs/récepteurs au moment de la désactivation du capteur de présence 22 ; et la procédure détaillée ci-dessus se reproduira suite à une nouvelle activation dudit capteur 22.
Chaque activation du capteur de présence 22 entraîne une nouvelle demande d'identification du signal HF entre les moyens émetteurs et les moyens récepteurs. Et chaque désactivation dudit capteur entraîne une reprise en compte de la liaison HF « permanente » des moyens émetteurs/récepteurs ; cette reprise en compte de la liaison HF « permanente » peut s'effectuer après une temporisation qui est supérieure à la période d'émission cyclique du signal HF.

Suite à une utilisation conventionnelle du véhicule, lorsque l'utilisateur interrompt le contact démarreur, le module récepteur 11 n'est plus activé et le microprocesseur 12 coupe automatiquement le circuit démarreur 15 par l'intermédiaire de la sortie de puissance 14 pour mettre en service le système anti-démarrage.
Cette mise en service du système anti-démarrage peut s'accompagner d'un signal de contrôle du témoin lumineux 7 (par exemple un éclairage continu « court » dé l'ordre de quelques dixièmes de seconde); également, cette activation du système anti-démarrage peut être signalée par les feux clignotants 20, 21 et le « buzzer » 17 (par exemple émission d'un signal lumineux « bref » accompagné d'un bip sonore).
L'interrupteur 6 des moyens émetteurs 1 peut être placé sur la position « arrêt » puisque le module récepteur 11 ne peut plus recevoir le signal HF émis.

Selon le mode de gestion qui vient d'être décrit, lorsque le véhicule est en fonctionnement, si l'utilisateur s'en éloigne après s'être levé du siège, sans couper la motorisation, dès que le module récepteur 11 ne reçoit plus le signal HF émis par les moyens émetteurs 1, le microprocesseur 12 actionne la sortie de puissance 14 pour couper le circuit d'allumage 15.
Le véhicule ne peut alors plus démarrer avant que le porteur des moyens émetteurs 1 active le contact démarreur.

En cas de vol ou d'agression, moteur en marche, le capteur de présence 22 est désactivé lorsque l'utilisateur normal se lève du siège, puis il est réactivé lorsque l'agresseur prend possession du véhicule.
Si le module récepteur 11 ne reçoit pas le signal HF émis par les moyens émetteurs 1 jusqu'à la fin du délai de sécurité (que l'on peut dénommer « plage d'identification ») déclenché par l'assise de l'agresseur, le microprocesseur 12 actionne la sortie de puissance 14 pour couper le circuit d'allumage 15 de manière à stopper le véhicule au terme de ladite « plage d'identification », en ne tenant plus alors compte de la liaison HF émetteur/récepteur.
Si le module récepteur 11 a constamment reçu le signal HF émis par les moyens émetteurs 1 jusqu'au terme de cette « plage d'identification », l'agresseur peut s'enfuir avec le véhicule, mais l'ouverture du circuit démarreur 15 s'effectuera lors d'un nouveau changement d'état du capteur pour rendre le véhicule inutilisable.

A titre de variante, la sortie de puissance 14 peut être placée sur le circuit démarreur du véhicule ; encore selon une autre variante, cette sortie de puissance 14 peut commander un système électro-mécanique placé sur le circuit d'arrivée d'essence.
Plus généralement, le système de commutation 14 géré par le microprocesseur 12 peut commander tout organe nécessaire au bon fonctionnement du: véhicule.

On notera encore qu'en plus de la commande des sorties de puissance 14 et 16, le microprocesseur 12 peut aussi gérer une ou plusieurs sortie(s) de puissance supplémentaire(s) chargée(s) d'activer ou de désactiver d'autres fonctions du véhicule. Ainsi, plusieurs organes nécessaires au bon fonctionnement du véhicule peuvent être gérés simultanément (circuit d'allumage, fonction démarreur, circuit d'arrivée d'essence...).

On notera encore que le capteur de siège 22 décrit en relation avec l'exemple de réalisation ci-dessus, peut être remplacé par un système de détection de l'enclenchement d'une vitesse, par un système de détection du franchissement d'un certain seuil de régime moteur (par exemple 2000 tours/min.), ou autre ..., tout en conservant le même principe général de fonctionnement. Le dernier cas évoqué (système de détection du franchissement d'un certain seuil de régime moteur), peut en particulier très bien convenir pour une application du dispositif de sécurité antivol à un véhicule du genre scooter.

Dans le cadre d'une application d'un dispositif de sécurité antivol similaire à un véhicule automobile (voiture classique ou poids lourd notamment), les moyens de détection de présence peuvent être constitués d'un capteur de fermeture/ouverture de la portière du conducteur, d'un capteur d'enclenchement de la ceinture de sécurité, d'un capteur infrarouge placé dans l'habitacle, ou autre...
D'autre part, la mise en service du module récepteur pourra dans ce cas être réalisée par un capteur infrarouge placé à proximité de la portière du conducteur, par exemple sur le rétroviseur ou la poignée.

Le principe conforme à la présente invention de neutralisation des moyens émetteurs/récepteurs par des moyens de détection de présence permet de sécuriser et de fiabiliser le fonctionnement général du dispositif antivol.
Le même principe peut être utilisé dans des domaines très différents par exemple pour l'accès à un local, pour le contrôle d'accès à un micro-ordinateur (le capteur de présence correspondant ici à une information d'utilisation d'une touche de clavier, d'une manette de jeu, de la souris ou autre...).

## Revendications

1. Procédé de sécurité antivol pour véhicule à moteur par gestion du fonctionnement d'un appareil du véhicule, lequel procédé consiste à :
rendre possible ledit fonctionnement par la détection par des moyens récepteurs (11) situés à proximité dudit appareil, d'un signal émis par des moyens émetteurs portables (1),
gérer ledit fonctionnement par des moyens de commande (12) agencés pour fermer un circuit de commande (15) de l'appareil par l'intermédiaire d'un système de commutation (14) après détection par les moyens récepteurs (11) du signal émis par les moyens émetteurs (1), et
activer des moyens de détection de présence (22) aménagés à proximité dudit appareil, ou intégrés audit appareil,
**caractérisé en ce qu'**il consiste :
- à actionner le système de commutation (14) interposé sur le circuit de commande (15) de manière a fermer ledit circuit (15) après détection dudit signal émis qui est cyclique, et
- à verrouiller cette fermeture par l'activation des moyens de détection de présence (22) de manière à ne plus tenir compte de la détection par les moyens récepteurs (11) dudit signal émis par les moyens émetteurs (1) pour rendre possible le fonctionnement dudit appareil après cette activation.

2. Procédé selon la revendication 1, **caractérisé en ce qu'**il consiste, une fois l'appareil en fonctionnement, à déclencher par chaque activation des moyens de détection de présence (22) une deuxième détection de sécurité du signal émis par les moyens émetteurs (1), pendant un délai déterminé, et, une fois ledit délai dépassé, à verrouiller soit la fermeture du circuit (15) dans le cas d'une validation dudit signal, soit l'ouverture dudit circuit (15) en cas de non validation dudit signal, ceci en ne tenant plus compte de la liaison émetteur/récepteur (1, 11) après le verrouillage de fermeture ou d'ouverture correspondant.

3. Procédé selon la revendication 2, **caractérisé en ce qu'**il consiste à tenir compte à nouveau de la liaison de base émetteur/récepteur (1, 11) après une désactivation des moyens de détection de présence (22).

4. Matériel pour la mise en oeuvre du procédé selon l'une quelconque des revendications 1 à 3, pour l'obtention d'un dispositif de sécurité antivol pour véhicule à moteur, le matériel comprenant :
- des moyens émetteurs portables (1),
- un module récepteur (11) situé à proximité de l'appareil du véhicule dont on désire gérer le fonctionnement,
- un système de commutation (14), type relais, transistor, interrupteur ou équivalent, interposé sur le circuit de commande (15) dudit appareil,
- des moyens de détection de présence (22) aménagés à proximité dudit appareil ou intégrés audit appareil, et
- des moyens de commande (12) agencés pour fermer le circuit de commande (15) de l'appareil par l'intermédiaire du système de commutation (14) après détection par le module récepteur (11) du signal émis par les moyens émetteurs (1),
**caractérisé en ce que** :
les moyens émetteurs (1) sont aptes à émettre un signal codé cyclique,
le système de commutation (14) est actionné lorsque le signal cyclique qui est émis par les moyens émetteurs (1) est détecté par le module récepteur (11) et reconnu, et
les moyens de commande (12) sont agencés pour verrouiller la fermeture dudit circuit de commande (15) et ne plus tenir compte du signal émis par les moyens émetteurs (1) lorsque lesdits moyens de détection de présence (22) sont activés.

5. Matériel selon la revendication 4, **caractérisé en ce que** le système de commutation (14) est en forme de sortie de puissance interposée sur le circuit de commande (15) de l'appareil pour couper ou rétablir ce circuit (15) en fonction du signal ou de l'absence de signal fourni par des moyens de commande (12) en forme de microprocesseur (12), lequel microprocesseur (12) gère l'envoi de ce signal en fonction des informations reçues du module récepteur (11).

6. Matériel selon l'une quelconque des revendications 4 ou 5, **caractérisé en ce que** les moyens de commande (12) sont agencés, une fois l'appareil en fonctionnement, pour déclencher par chaque activation des moyens de détection de présence (22) une deuxième détection de sécurité du signal émis par les moyens émetteurs (1), pendant un délai déterminé, et une fois ledit délai dépassé, agencés pour verrouiller soit la fermeture du circuit de commande (15) dans le cas d'une validation de signal, soit l'ouverture dudit circuit (15) en cas de non validation du signal, ceci en ne tenant plus compte de la liaison émetteur/récepteur (1, 11) après ledit verrouillage de fermeture ou d'ouverture.

7. Matériel selon l'une quelconque des revendications 4 à 6, **caractérisé en ce que** le module récepteur (11) est embarqué sur ledit véhicule, les moyens de détection de présence (22) sont intégrés audit véhicule et le système de commutation (14) est placé sur au moins un circuit nécessaire au bon fonctionnement dudit véhicule, par exemple le circuit d'allumage de la motorisation, le circuit démarreur ou le circuit d'arrivée de carburant, les moyens de commande (12) sont agencés pour fermer ledit circuit (15) par l'intermédiaire dudit système de commutation (14) lorsque le signal émis par les moyens émetteurs (1) est détecté par le module récepteur (11) et reconnu, et agencés pour gérer le verrouillage de la fermeture ou de l'ouverture dudit circuit (15) en fonction du second contrôle d'identification déclenché par les moyens de détection de présence (22).

8. Matériel selon la revendication 7, **caractérisé en ce qu'**il comporte des moyens de détection de présence en forme de capteur (22) implanté dans ou sur le siège du véhicule et adapté pour être activé lorsque l'utilisateur du véhicule s'assoit sur ledit siège.

9. Matériel selon la revendication 7, **caractérisé en ce qu'**il comporte des moyens de détection de présence (22) en forme de système de détection de l'enclenchement d'une vitesse.

10. Matériel selon la revendication 7, **caractérisé en ce qu'**il comporte des moyens de détection de présence (22) en forme de système de détection d'un seuil de régime moteur.

11. Matériel selon la revendication 7, **caractérisé en ce qu'**il comporte des moyens de détection de présence (22) en forme de capteur de fermeture/ouverture de la portière du conducteur, dans le cadre d'une application à un véhicule automobile ou à un poids lourd.

12. Matériel selon la revendication 7, **caractérisé en ce qu'**il comporte des moyens de détection de présence (22) en forme de capteur d'enclenchement de la ceinture de sécurité, dans le cadre d'une application à un véhicule automobile ou à un poids lourd.

13. Matériel selon la revendication 7, **caractérisé en ce qu'**il comporte des moyens de détection de présence (22) en forme de capteur infrarouge implanté dans l'habitacle, dans le cadre d'une application à un véhicule automobile ou à un poids lourd.

14. Matériel selon quelconque des revendications 7 à 13, **caractérisé en ce qu'**il comporte des moyens (23) qui permettent de détecter la présence vu l'absence d'un contact démarreur, l'information correspondante étant transmise aux moyens de commande (12) de manière à activer le module récepteur (11) uniquement en cas de présence dudit contact démarreur.

15. Matériel selon quelconque des revendications 7 à 13, **caractérisé en ce qu'**il comporte un capteur de présence (22) à proximité de la portière du conducteur, dans le cadre d'une application à un véhicule automobile ou à un poids lourd, l'information d'activation dudit capteur de présence (22) étant transmise aux moyens de commande (12) de manière à activer le module récepteur (11).

## Claims

1. An anti-theft safety method for an engine vehicle by managing the operation of an apparatus of the vehicle, which method consists in:
rendering said operation possible after detection by receiving means (11) situated close to said apparatus, of a signal transmitted by portable transmitting means (1),
managing said operation by control means (12) laid out to close a control circuit (15) of the apparatus by means of a switching system (14) after detection by the receiving means (11), of the signal transmitted by the transmitting means (1), and
activating presence detection means (22) arranged close to said apparatus or integrated to said apparatus,
**characterized in that** it consists:
- in activating the switching system (14) interposed on the control circuit (15) in order to close said circuit (15) after detection of the transmitted signal which is a cyclic signal, and
- in locking this closure by the activation of the presence detection means (22) in order to not take into account any longer the detection by the receiving means (11) of the signal transmitted by the transmitting means (1) to enable the operation of said apparatus, after said activation of the presence detection means (22).

2. A method according to claim 1, **characterized in that** it consists, once the apparatus in operation, in triggering by each activation of the presence detection means (22) a second safety detection of the signal transmitted by the transmitting means (1), for a pre-set time period, and, once said time-period has been exceeded, in locking either the closure of the circuit (15) in case of a validation of said signal, or the opening of said circuit (15) in case of non-validation of said signal, this without taking into account any longer the transmitter/receiver link (1,11), after corresponding locked closure or opening.

3. A method according to claim 2, **characterized in that** it consists in taking into account again the basic transmitter/receiver link (1,11) after deactivation of the presence detection means (22).

4. A hardware for the implementation of the method according to any of the claims 1 to 3 for obtaining an anti-theft safety device for an engine vehicle, said hardware comprising:
- portable transmitting means (1),
- a receiver module (11) situated close to the apparatus of the vehicle whereof one wishes to manage the operation,
- a switching system (14), such as relay, transistor, switch or equivalent, interposed on the control circuit (15) of said apparatus,
- presence detection means (22) arranged close to said apparatus or integrated to said apparatus, and
- control means (12) laid out to close the control circuit (15) of the apparatus by means of the switching system (14) after detection by the receiver module (11) of the signal transmitted by the transmitting means (1), **characterized in that**:
the transmitting means (1) are capable of transmitting a cyclic encoded signal,
the switching system (14) is activated when the cyclic signal which is transmitted by the transmitting means (1) is detected by the receiver module (11) and acknowledged, and
the control means (12) are laid out to lock the closure of said control circuit (15) and not take into account any longer of the signal transmitted by the transmitting means (1) when said presence detection means (22) are activated.

5. A hardware according to claim 4, **characterized in that** said switching system (14) is in the form of power output interposed on the control circuit (15) of the apparatus to cut off or restore such circuit in relation to the signal or the absence of signal supplied by control means in the form of a microprocessor (12), which microprocessor (12) manages the sending of this signal in relation to the information received by the receiver module (11).

6. A hardware according to any of the claims 4 or 5, **characterized in that** said control means (12) are laid out, once the apparatus in operation, to trigger by each activation of the presence detection means (22), a second safety detection of the signal transmitted by the transmitting means (1), for a pre-set time period, and once said time-period has expired, laid out to lock either the closure of the control circuit (15) in case of a validation of signal, or the opening of said circuit (15) in case of non-validation of the signal, this without taking into account any longer the transmitter/receiver link, after said locked closure or opening.

7. A hardware according to any of the claims 5 to 6, **characterized in that** the receiver module (11) is on board said vehicle, the presence detection means (22) are integrated to said vehicle and the switching system (14) is placed on at least a circuit necessary to the correction operation of said vehicle, for example the ignition circuit of the motorisation, the starter circuit or the fuel incoming circuit, and the control means (12) are laid out to close said circuit (15) by means of said switching system (14) when the signal transmitted by the transmitting means (1) is detected by the receiver module (11) and acknowledged, and laid out to manage the locking of the closure or of the opening of said circuit (15) in relation to the second identification control triggered by the presence detection means (22).

8. A hardware according to claim 7, **characterized in that** it comprises presence detection means in the form of a sensor (22) implanted in or on the seat of the vehicle and adapted to be activated when the user of the vehicle sits down on said seat.

9. A hardware according to claim 7, **characterized in that** it comprises presence detection means (22) in the form of a system for detecting when a gear has been selected.

10. A hardware according to claim 7, **characterized in that** it comprises presence detection means (22) in the form of a system for detecting the threshold of a given engine duty.

11. A hardware according to claim 7, **characterized in that** it comprises presence detection means (22) in the form of a closure/opening sensor of the driver's door, within the framework of an application to an automotive vehicle or to a lorry.

12. A hardware according to claim 7, **characterized in that** it comprises presence detection means (22) in the form of a safety belt fastening sensor, within the framework of an application to an automotive vehicle or to a lorry.

13. A hardware according to claim 7, **characterized in that** it comprises presence detection means (22) in the form of an infrared sensor implanted in the body of the car, within the framework of an application to an automotive vehicle or to a lorry.

14. A hardware according to any of the claims 7 to 13, **characterized in that** it comprises means (23) which enable to detect the presence or the absence of a starter contact the corresponding information being transmitted to the control means (12) in order to activate the receiver module (11) only in case of presence of said starter contact.

15. A hardware according to any of the claims 7 to 13, **characterised in that** it comprises a presence sensor (22) close to the driver's door, within the framework of an application to an automotive vehicle or to a lorry, the information regarding the activation of said presence sensor being transmitted to the control means (12) in order to activate the receiver module (11).

## Patentansprüche

1. Diebstahlsicherungsverfahren für ein motorbetriebenes Fahrzeug durch Steuerung der Funktion eines Geräts des Fahrzeugs, wobei das Verfahren darin besteht:
- die Funktion durch die Erfassung eines von tragbaren Sendemitteln (1) entsandten Signals durch Empfangsmittel (11), die sich in der Nähe des Geräts befinden, zu ermöglichen,
- die Funktion durch Steuermittel (12) zu steuern, die derart angeordnet sind, dass sie eine Steuerschaltung (15) des Geräts mit Hilfe eines Umschaltsystems (14) nach Erfassung des von den Sendemitteln (1) entsandten Signals durch die Empfangsmittel (11) schließen,
- Mittel (22) zur Anwesenheitserfassung zu aktivieren, die in der Nähe des Geräts angeordnet oder in dieses Gerät integriert sind,
**dadurch gekennzeichnet, dass** es darin besteht:
- das Umschaltsystem (14), das auf der Steuerschaltung (15) angeordnet ist, zu betätigen, so dass die Schaltung (15) nach Erfassung des entsandten Signals, das zyklisch ist, geschlossen wird, und
- diesen Verschluss durch die Aktivierung der Anwesenheitserfassungsmittel (22) zu verriegeln, um die Erfassung des von den Sendemitteln (1) entsandten Signals durch die Empfangsmittel (11) nicht mehr zu berücksichtigen, um die Funktion des Geräts nach dieser Aktivierung möglich zu machen.

2. Verfahren nach Anspruch 1, **dadurch gekennzeichnet, dass** es darin besteht, wenn das Gerät in Funktion ist, durch jede Aktivierung der Anwesenheitserfassungsmittel (22) eine zweite Sicherheitserfassung des von den Sendemitteln (1) entsandten Signals während einer bestimmten Frist auszulösen und, wenn diese Frist verstrichen ist, entweder den Verschluss der Schaltung (15) im Falle einer Validierung des Signals zu verriegeln oder die Öffnung der Schaltung (15) im Falle einer Nicht-Validierung des Signals zu verriegeln, wobei die Verbindung Sender/Empfänger (1, 11) nach dem entsprechenden Verriegeln eines Verschlusses oder einer Öffnung nicht mehr berücksichtigt wird.

3. Verfahren nach Anspruch 2, **dadurch gekennzeichnet, dass** es darin besteht, die Basisverbindung Sender/Empfänger (1, 11) nach einer Deaktivierung der Anwesenheitserfassungsmittel (22) wieder zu berücksichtigen.

4. Ausrüstung für den Einsatz des Verfahrens nach einem der Ansprüche 1 bis 3, um eine Diebstahlsicherungsvorrichtung für ein motorbetriebenes Fahrzeug zu erhalten, wobei die Ausrüstung umfasst:
- tragbare Sendemittel (1),
- ein Empfangsmodul (11), das sich in der Nähe des Geräts des Fahrzeugs befindet, dessen Funktion gesteuert werden soll,
- ein Umschaltsystem (14) vom Typ Relais, Transistor, Schalter oder dergleichen, das auf der Steuerschaltung (15) des Geräts angeordnet ist,
- Anwesenheitserfassungsmittel (22), die in der Nähe des Geräts angeordnet oder in das Gerät integriert sind, und
- Steuermittel (12), die derart angeordnet sind, dass sie die Steuerschaltung (15) des Geräts mit Hilfe des Umschaltsystems (14) nach Erfassung des von den Sendemitteln (1) entsandten Signals durch das Empfangsmodul (11) schließen,
**dadurch gekennzeichnet, dass**:
- die Sendemittel (1) ein zyklisch codiertes Signal entsenden können,
- das Umschaltsystem (14) betätigt wird, wenn das zyklische Signal, das von den Sendemitteln (1) entsandt wird, von dem Empfangsmodul (11) erfasst und erkannt wird, und
- die Steuermittel (12) derart angeordnet sind, dass sie den Verschluss der Steuerschaltung (15) verriegeln und das von den Sendemitteln (1) entsandte Signal nicht mehr berücksichtigen, wenn die Anwesenheitserfassungsmittel (22) aktiviert sind.

5. Ausrüstung nach Anspruch 4, **dadurch gekennzeichnet, dass** das Umschaltsystem (14) in Form eines Leistungsausgangs vorhanden ist, der auf der Steuerschaltung (15) des Geräts vorgesehen ist, um diese Schaltung (15) in Abhängigkeit von dem Signal oder dem Fehlen eines Signals, das von den Steuermitteln (12) in Form eines Mikroprozessors (12) geliefert wird, zu unterbrechen oder wieder herzustellen, wobei der Mikroprozessor (12) das Entsenden dieses Signals in Abhängigkeit von den vom Empfangsmodul (11) empfangenen Informationen steuert.

6. Ausrüstung nach einem der Ansprüche 4 oder 5, **dadurch gekennzeichnet, dass** die Steuermittel (12), wenn das Gerät in Funktion ist, derart angeordnet sind, dass sie durch jede Aktivierung der Anwesenheitserfassungsmittel (22) eine zweite Sicherheitserfassung des von den Sendemitteln (1) entsandten Signals während einer bestimmten Frist auslösen, und wenn diese Frist verstrichen ist, derart angeordnet sind, dass sie entweder den Verschluss der Steuerschaltung (15) im Falle einer Validierung des Signals oder die Öffnung der Schaltung (15) im Falle einer Nicht-Validierung des Signals verriegeln, wobei die Verbindung Sender/Empfänger (1, 11) nach der Verriegelung des Verschlusses oder der Öffnung nicht mehr berücksichtigt wird.

7. Ausrüstung nach einem der Ansprüche 4 bis 6, **dadurch gekennzeichnet, dass** das Empfangsmodul (11) in dem Fahrzeug eingebaut ist, dass die Anwesenheitserfassungsmittel (22) in das Fahrzeug integriert sind und dass das Umschaltsystem (14) auf mindestens einer für den ordnungemäßen Betrieb des Fahrzeugs erforderlichen Schaltung, beispielsweise der Zündschaltung für den Motor, angeordnet ist, dass die Steuermittel (12) derart angeordnet sind, dass sie die Schaltung (15) mit Hilfe des Umschaltsystems (14) schließen, wenn das von den Sendemitteln (1) entsandte Signal von dem Empfangsmodul (11) erfasst und erkannt wird, und derart angeordnet sind, dass sie die Verriegelung des Verschlusses oder der Öffnung der Schaltung (15) in Abhängigkeit von der zweiten Identifikationskontrolle, die von den Anwesenheitserfassungsmitteln (22) ausgelöst wird, steuern.

8. Ausrüstung nach Anspruch 7, **dadurch gekennzeichnet, dass** sie Anwesenheitserfassungsmittel in Form eines Sensors (22) umfasst, der in oder auf dem Fahrzeugsitz vorgesehen und derart ausgeführt ist, dass er aktiviert wird, wenn sich der Benutzer des Fahrzeugs auf den Sitz setzt.

9. Ausrüstung nach Anspruch 7, **dadurch gekennzeichnet, dass** sie Anwesenheitserfassungsmittel (22) in Form eines Systems zur Erfassung des Einlegens eines Gangs umfasst.

10. Ausrüstung nach Anspruch 7, **dadurch gekennzeichnet, dass** sie Anwesenheitserfassungsmittel (22) in Form eines Systems zur Erfassung einer Motorbetriebsschwelle umfasst.

11. Ausrüstung nach Anspruch 7, **dadurch gekennzeichnet, dass** sie Anwesenheitserfassungsmittel (22) in Form eines Verschluss-/Öffnungssensor der Fahrertür im Rahmen einer Anwendung für ein Kraftfahrzeug oder einen Lastkraftwagen umfasst.

12. Ausrüstung nach Anspruch 7, **dadurch gekennzeichnet, dass** sie Anwesenheitserfassungsmittel (22) in Form eines Sensors für das Einrasten des Sicherheitsgurts im Rahmen einer Anwendung für ein Kraftfahrzeug oder einen Lastkraftwagen umfasst.

13. Ausrüstung nach Anspruch 7, **dadurch gekennzeichnet, dass** sie Anwesenheitserfassungsmittel (22) in Form eines Infrarotsensor, der in das Karosseriegehäuse integriert ist, im Rahmen einer Anwendung für ein Kraftfahrzeug oder einen Lastkraftwagen umfasst.

14. Ausrüstung nach einem der Ansprüche 7 bis 13, **dadurch gekennzeichnet, dass** sie Mittel (23) umfasst, die es ermöglichen, das Vorhandensein oder das Fehlen eines Startkontakts zu erfassen, wobei die entsprechende Information an die Steuermittel (12) übertragen wird, um das Empfangsmodul (11) nur im Falle eines Vorhandenseins des Startkontakts zu aktivieren.

15. Ausrüstung nach einem der Ansprüche 7 bis 13, **dadurch gekennzeichnet, dass** sie einen Anwesenheitssensor (22) in der Nähe der Fahrertür im Rahmen einer Anwendung für ein Kraftfahrzeug oder einen Lastkraftwagen umfasst, wobei die Information zur Aktivierung des Anwesenheitssensors (22) an die Steuermittel (12) übertragen wird, um das Empfangsmodul (11) zu aktivieren.
